# EUROPEAN PATENT APPLICATION

(11) **EP 2 339 468 A2**
(43) Date of publication of application: **29.06.2011**
(21) Application number: 10252180.4
(22) Date of filing: 21.12.2010
(51) Int. Cl.: G06F 9/50

(54) **Accelerating opencl applications by utilizing a virtual opencl device as interface to compute clouds**

(30) Priority: 26.12.2009 US 290194 P; 23.11.2010 US 952405
(71) Applicant: Intel Corporation, Santa Clara, CA 95052 (US)
(72) Inventor: Ratering, Ralf, 50321 Bruehl (DE); Hoppe, Hans-Christian, 53225, Bonn (DE)
(74) Representative: Beresford, Keith Denis Lewis

(57) **Abstract**

Methods and apparatus for accelerating OpenCL (Open Computing Language) applications by utilizing a virtual OpenCL device as interface to compute clouds are described. In one embodiment, one or more computing operations may be offloaded from a local processor to a virtual device that represents available resources of a cloud. Other embodiments are also described.

## Description

### FIELD

The present disclosure generally relates to the field of computing. More particularly, an embodiment of the invention generally relates to techniques for accelerating OpenCL applications by utilizing a virtual OpenCL device as interface to compute clouds.

### BACKGROUND

OpenCL (Open Computing Language) is the first open, royalty-free standard for general-purpose parallel programming of heterogeneous systems. OpenCL provides a uniform programming environment for software developers to write efficient, portable code for high-performance compute servers, desktop computer systems and handheld devices using a diverse mix of multi-core CPUs (Central Processing Units), GPUs (Graphics Processing Units), Cell-type architectures and other parallel processors such as DSPs (Digital Signal Processors). The standard is developed by the Khronos Group.

### BRIEF DESCRIPTION OF THE DRAWINGS

The detailed description is provided with reference to the accompanying figures. In the figures, the left-most digit(s) of a reference number identifies the figure in which the reference number first appears. The use of the same reference numbers in different figures indicates similar or identical items.
Figs. 1 and 3-4 illustrate block diagrams of embodiments of computing systems, which may be utilized to implement some embodiments discussed herein.
Fig. 2 illustrates a flow diagram according to an embodiment of the invention.

### DETAILED DESCRIPTION

In the following description, numerous specific details are set forth in order to provide a thorough understanding of various embodiments. However, various embodiments of the invention may be practiced without the specific details. In other instances, well-known methods, procedures, components, and circuits have not been described in detail so as not to obscure the particular embodiments of the invention. Further, various aspects of embodiments of the invention may be performed using various means, such as integrated semiconductor circuits ("hardware" also referred to as "HW"), computer-readable instructions organized into one or more programs ("software" also referred to as "SW"), or some combination of hardware and software. For the purposes of this disclosure reference to "logic" shall mean either hardware, software (including for example micro-code that controls the operations of a processor), or some combination thereof.

Reference in the specification to "one embodiment" or "an embodiment" means that a particular feature, structure, or characteristic described in connection with the embodiment may be included in at least an implementation. The appearances of the phrase "in one embodiment" in various places in the specification may or may not be all referring to the same embodiment.

Also, in the description and claims, the terms "coupled" and "connected," along with their derivatives, may be used. In some embodiments of the invention, "connected" may be used to indicate that two or more elements are in direct physical or electrical contact with each other. "Coupled" may mean that two or more elements are in direct physical or electrical contact. However, "coupled" may also mean that two or more elements may not be in direct contact with each other, but may still cooperate or interact with each other.

In OpenCL, parallel compute kernels may be offloaded from a host (usually a CPU) to an accelerator device in the same system (e.g., a GPU, CPU or FPGA (Field-Programmable Gate Array). Moreover, OpenCL explicitly covers mobile and embedded devices to ease the development of portable compute-intensive applications. However, the parallel compute power of mobile devices in the foreseeable future may be rather limited. While this may be fine for small low-latency graphics workloads, attempting to run compute-intensive OpenCL applications (like simulations, complex data analysis etc. in science, engineering and business computing) will lead to a disappointing user experience. Also, there will likely be very light-weight or embedded platforms that will not contain OpenCL-capable devices at all, and have CPUs with very limited performance. Complex OpenCL applications will simply not run on these systems.

Even on standard desktops and workstations compute-intensive OpenCL applications could be accelerated by offloading OpenCL workloads to server farms in a compute cloud. However, the existing interfaces that enable running workloads in a cloud may require significant modifications of the application itself. These modifications may also be tied to a specific cloud computing system, which even further hinders adoption of cloud computing in the industry.

To this end, some of the embodiments discussed herein provide techniques for accelerating OpenCL applications by utilizing a virtual OpenCL device as interface to compute clouds. In an embodiment, compute-intensive OpenCL applications are accelerated by offloading one or more compute kernel(s) of an application to a compute cloud over a local network (such as the Internet or an intranet). In one embodiment, the offloading may be performed such that it is transparent for the application; hence, there will be no need to modify the application code. This allows OpenCL applications to run on light-weight systems and tap into the performance potential of large servers in a back-end cloud.

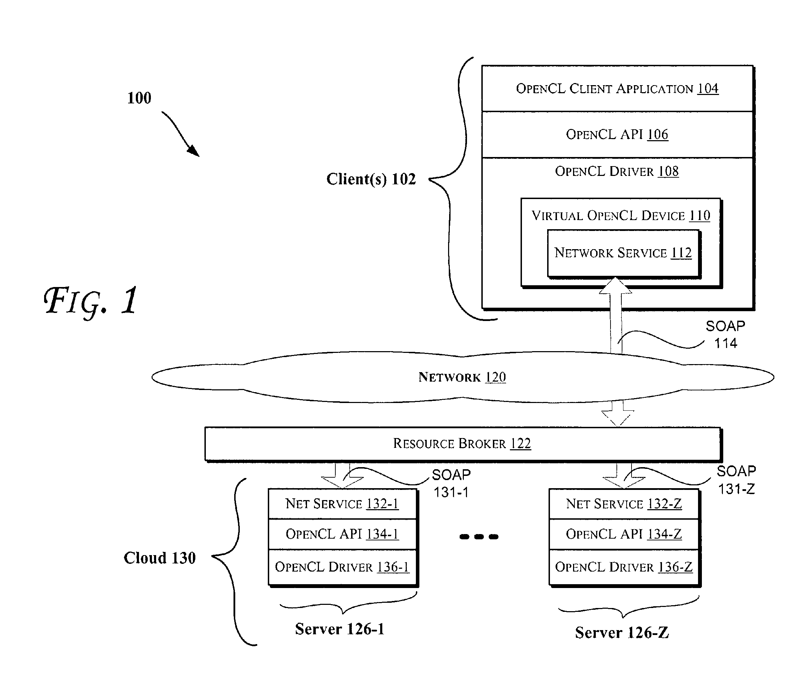

**Fig. 1** illustrates a computing system 100 including a virtual OpenCL device, according to an embodiment. As shown, one or more clients 102 may include an OpenCL client application 104 which may be an application program that is compliant with OpenCL, an OpenCL API (Application Programming Interface) 106, an OpenCL Driver 108, a virtual OpenCL device 110, and a client network service 112.

The network service 112 is coupled via a link (e.g., operating in accordance with SOAP (Simple Objet Access Protocol)) with a network 120. In one embodiment, the network 120 may include a computer network (including for example, the Internet, an intranet, or combinations thereof) that allows various agents (such as computing devices) to communicate data. In an embodiment, the network 120 may include one or more interconnects (or interconnection networks) that communicate via a serial (e.g., point-to-point) link and/or a shared communication network.

In one embodiment, the system 100 may support a layered protocol scheme, which may include a physical layer, a link layer, a routing layer, a transport layer, and/or a protocol layer. The network 120 may further facilitate transmission of data (e.g., in form of packets) from one protocol (e.g., caching processor or caching aware memory controller) to another protocol for a point-to-point or shared network. Also, in some embodiments, the network 120 may provide communication that adheres to one or more cache coherent protocols.

Additionally, the network 120 may utilize any type of communication protocol such as Ethernet, Fast Ethernet, Gigabit Ethernet, wide-area network (WAN), fiber distributed data interface (FDDI), Token Ring, leased line, analog modem, digital subscriber line (DSL and its varieties such as high bit-rate DSL (HDSL), integrated services digital network DSL (IDSL), etc.), asynchronous transfer mode (ATM), cable modem, and/or FireWire.

Wireless communication through the network 120 may be in accordance with one or more of the following: wireless local area network (WLAN), wireless wide area network (WWAN), code division multiple access (CDMA) cellular radiotelephone communication systems, global system for mobile communications (GSM) cellular radiotelephone systems, North American Digital Cellular (NADC) cellular radiotelephone systems, time division multiple access (TDMA) systems, extended TDMA (E-TDMA) cellular radiotelephone systems, third generation partnership project (3G) systems such as wide-band CDMA (WCDMA), etc. Moreover, network communication may be established by internal network interface devices (e.g., present within the same physical enclosure as a computing system) or external network interface devices (e.g., having a separate physical enclosure and/or power supply than the computing system to which it is coupled) such as a network interface card or controller (NIC).

As illustrated in Fig. 1, the network 120 may be coupled to a resource broker logic 122 which determines which one of one or more available servers (or computing resources) 126-1 to 126-Z at a cloud 130 may provide compute offload services to the client(s) 102. Links 131-1 to 131-Z (e.g., operating in accordance with SOAP) may couple the servers 126-1 to 126-Z to resource broker 122. Each of the servers 126-1 to 126-Z may include a network service (132-1 to 132-Z), an OpenCL API (134-1 to 134-Z), and an OpenCL driver (136-1 to 136-Z).

In an embodiment, the virtual OpenCL device 110 may be integrated into the compute cloud with the OpenCL framework. This virtual device 110 may be implemented inside the OpenCL driver 108 that handles the communication with the cloud 130 infrastructure. The OpenCL driver 108 may be installed separately on the client system or may be available as an extension to an existing OpenCL driver. The driver 108 may appear as a standard OpenCL driver to the application 104 and may handle all communication with the cloud 130 infrastructure transparently in an embodiment. A user may be able to switch the cloud support on and off in the driver system panel. Furthermore, the application itself may not notice any difference, except for a new device that appears in the list of available devices when cloud support is enabled, for example.

In an embodiment, the virtual OpenCL device 110 may represent the available resources in the cloud 130 to the client(s) 102. If the application 104 is for instance looking for the device with the highest performance, it may select the virtual device 110 from the list and use it through the same OpenCL functions as a local device. In an embodiment, one special property of the virtual device is that it may not execute the OpenCL functions locally, but instead forwards them over the network to a compute cloud 130. The OpenCL driver 108 on the host/client platform 102 may act as a client (e.g., via the network service 112) that communicates with the network service interface(s) provided by the cloud (e.g., services 132-1 to 132-Z).

To transparently handle the kernel offload and the data transfer back and forth between client 102 and cloud 130, API calls that are defined in the OpenCL runtime may be implemented as Web/network Services. For example, every time an API function is executed by the application 104, the virtual device 110 may detect this and invoke the corresponding Web/network service in the cloud 130. In some embodiments, the cloud 130 may consist of a heterogeneous collection of computing systems. The only requirement may be that the computing system(s) support for OpenCL. Each system may run the network services that correspond to the OpenCL runtime calls. The network services may, in turn, execute the OpenCL functions on the OpenCL devices that are available locally on a server (e.g., available locally on one or more of server(s) 126-1 to 126-Z).

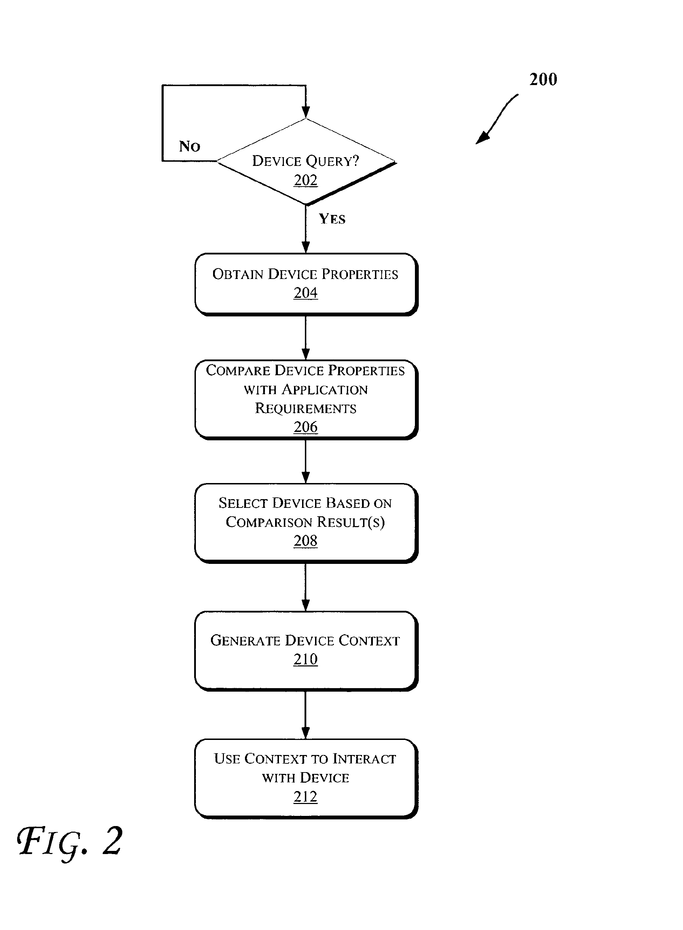

**Fig. 2** illustrates a method 200 to accelerate OpenCL applications via a virtual device, according to an embodiment. In some embodiments, one or more components discussed herein (e.g., with reference to Figs. 1 or 3-4) may be used to perform one or more of the operations of method 200.

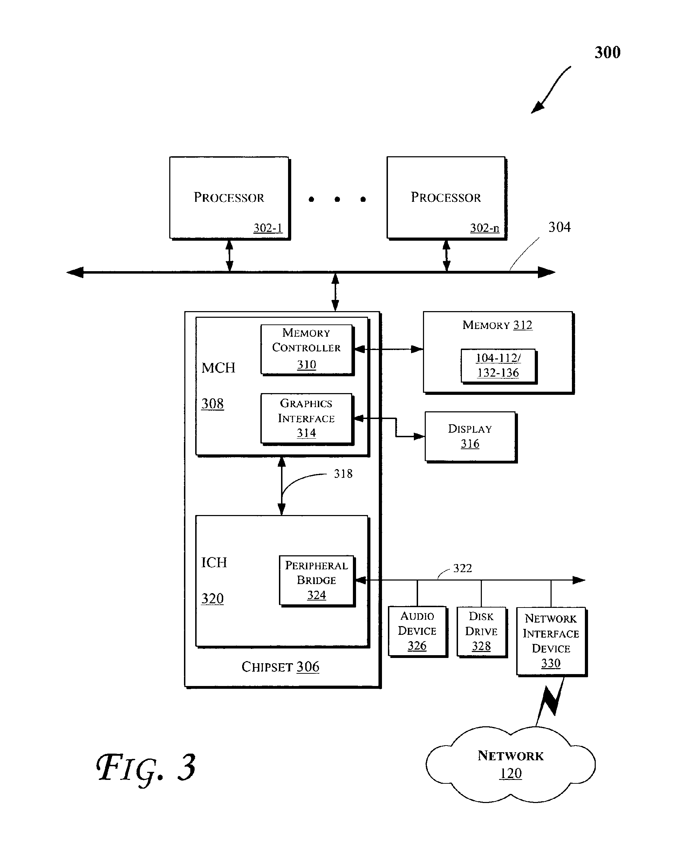

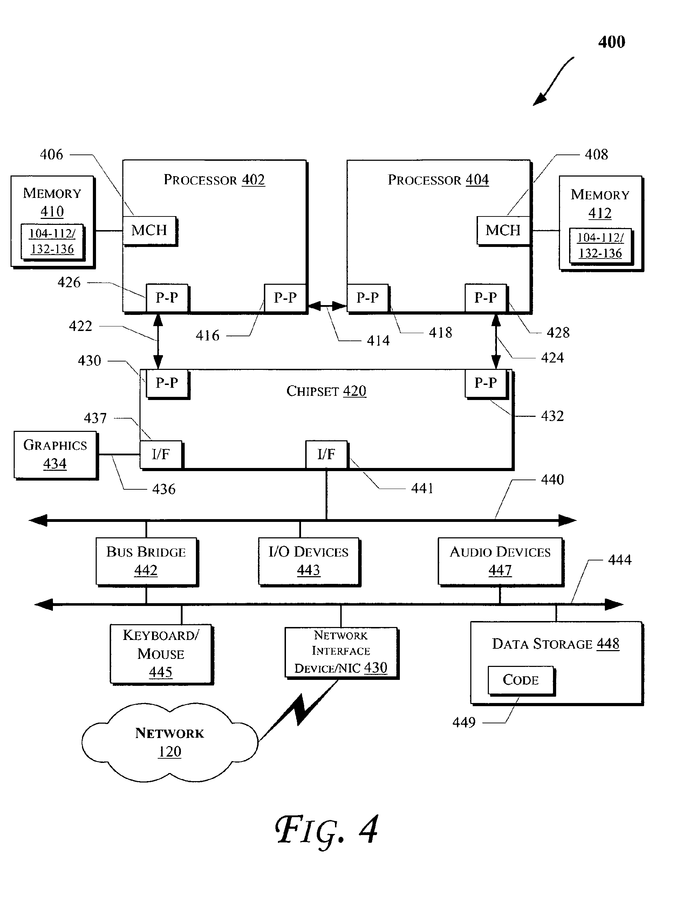

Referring to Figs. 1-2, at an operation 202, it is determined whether an application (e.g., application 104) has requested the platform for its available devices, e.g., via an API call clGetDeviceIds(). At an operation 204, the platform (e.g., a processor such as those discussed with reference to Figs. 3 or 4) may ask available device(s) for their properties, e.g., via a call clGetDeviceInfo(). At an operation 206, the application may perform a comparison between the device properties and application's requirements. Based on the comparison result(s), the application may then select a device at an operation 208. At an operation 210, the application may create a context on the device, e.g., via a call clCreateContext(). This context may then be used for further interaction with the device at an operation 212. In an embodiment, this cloud-enhanced driver 108 adds a virtual device 110 to the list of available devices returned, e.g., in response to the call clGetDeviceIds(). The virtual device represents the available resources in the cloud and its properties describe the hardware features of the corresponding systems.

In some embodiments, the cloud 130 consists of a server farm with powerful and/or multi-core CPUs, so the property CL_DEVICE_TYPE of the virtual device would be set to CL_DEVICE_TYPE_CPU. However, the cloud systems may contain GPUs (Graphics Processing Units), accelerators, etc., in which case the device type would be CL_DEVICE_TYPE_GPU or CL_DEVICE_TYPE_ACCELERATOR, respectively. This means that each virtual device may represent a set of homogeneous physical systems of the same type and with the same properties in the cloud. In some embodiments, the cloud could implement a virtual device of type CL_DEVICE_TYPE_CPU by deploying identical virtual machines onto heterogeneous physical systems. So, the properties of the virtual device would actually reflect the configuration of the virtual machine that will be deployed on the physical systems in the cloud. In order to use the virtual device, an application would select the device from the list and use it through the same OpenCL functions as a local device. Accordingly, an application may determine if it makes sense to run a given OpenCL kernel on a cloud system or locally, e.g., by querying the properties. In some embodiments, the application code does not need to be modified to take advantage of the cloud. Instead, the cloud may be seamlessly integrated in the OpenCL framework and selected by the application solely based on its OpenCL properties.

Accordingly, some embodiments utilize both local compute offload and cloud computing. For example, resource abstraction/management and data transfer capabilities and protocols (such as web/network services) provided by cloud computing may be utilized and integrated into the OpenCL framework via a virtual OpenCL device 110. Thus, the potential of clouds becomes available to OpenCL application(s) 104, and there is little or no need to adapt the applications to use clouds in general or specific cloud implementations. Moreover, the interactions with cloud interfaces may be encapsulated in the virtual OpenCL device 110 and handled by the OpenCL driver 108. Additionally, a "cloud-enabled" OpenCL framework may allow OpenCL applications to take advantage of the compute power available on server platforms, leading to superior functionality and/or user experience across a wide range of client form factors. For example, compute capabilities of a thin device could be expanded to include capabilities normally provided by a server farm. In addition, OpenCL cloud services may be offered as a new business service, e.g., the OpenCL driver may be offered for free with per use charges.

**Fig. 3** illustrates a block diagram of an embodiment of a computing system 300. In various embodiments, one or more of the components of the system 300 may be provided in various electronic devices capable of performing one or more of the operations discussed herein with reference to some embodiments of the invention. For example, one or more of the components of the system 300 may be used to perform the operations discussed with reference to Figs. 1-2, e.g., to accelerate OpenCL applications by utilizing a virtual OpenCL device as interface to compute clouds. Also, various storage devices discussed herein (e.g., with reference to Figs. 3 and/or 4) may be used to store data, operation results, etc. In one embodiment, data, including sequences of instructions that are executed by the processor 302, associated with operations of method 300 of Fig. 3 may be stored in memory device(s) (such as memory 312 or one or more caches (e.g., L1 caches in an embodiment) present in processors 302 of Fig. 3 or 402/404 of Fig. 4).

Moreover, the computing system 300 may include one or more central processing unit(s) (CPUs) 302 or processors that communicate via an interconnection network (or bus) 304. The processors 302 may include a general purpose processor, a network processor (that processes data communicated over a computer network 120), or other types of a processor (including a reduced instruction set computer (RISC) processor or a complex instruction set computer (CISC)). Moreover, the processors 302 may have a single or multiple core design. The processors 302 with a multiple core design may integrate different types of processor cores on the same integrated circuit (IC) die. Also, the processors 302 with a multiple core design may be implemented as symmetrical or asymmetrical multiprocessors. Additionally, the processors 302 may utilize an SIMD (Single-Instruction, Multiple-Data) architecture.

A chipset 306 may also communicate with the interconnection network 304. The chipset 306 may include a memory control hub (MCH) 308. The MCH 308 may include a memory controller 310 that communicates with a memory 312 (which may store one or more of the items 104-112 of Fig. 1 in case the system 300 is a client and store one or more of the items 132-136 of Fig. 1 in case the system 300 is a cloud resource/server). The memory 312 may store data, including sequences of instructions that are executed by the processor 302, or any other device included in the computing system 300. In one embodiment of the invention, the memory 312 may include one or more volatile storage (or memory) devices such as random access memory (RAM), dynamic RAM (DRAM), synchronous DRAM (SDRAM), static RAM (SRAM), or other types of storage devices. Nonvolatile memory may also be utilized such as a hard disk. Additional devices may communicate via the interconnection network 304, such as multiple CPUs and/or multiple system memories.

The MCH 308 may also include a graphics interface 314 that communicates with a display 316. The display 316 may be used to show a user results of operations discussed herein. In an embodiment of the invention, the display 316 may be a flat panel display that communicates with the graphics interface 314 through, for example, a signal converter that translates a digital representation of an image stored in a storage device such as video memory or system memory into display signals that are interpreted and displayed by the display 316. The display signals produced by the interface 314 may pass through various control devices before being interpreted by and subsequently displayed on the display 316.

A hub interface 318 may allow the MCH 308 and an input/output control hub (ICH) 320 to communicate. The ICH 320 may provide an interface to I/O devices that communicate with the computing system 300. The ICH 320 may communicate with a bus 322 through a peripheral bridge (or controller) 324, such as a peripheral component interconnect (PCI) bridge, a universal serial bus (USB) controller, or other types of peripheral bridges or controllers. The bridge 324 may provide a data path between the CPU 302 and peripheral devices. Other types of topologies may be utilized. Also, multiple buses may communicate with the ICH 320, e.g., through multiple bridges or controllers. Moreover, other peripherals in communication with the ICH 320 may include, in various embodiments of the invention, integrated drive electronics (IDE) or small computer system interface (SCSI) hard drive(s), USB port(s), a keyboard, a mouse, parallel port(s), serial port(s), floppy disk drive(s), digital output support (e.g., digital video interface (DVI)), or other devices.

The bus 322 may communicate with an audio device 326, one or more disk drive(s) 328, and a network interface device 330, which may be in communication with the computer network 120. In an embodiment, the device 330 may be a NIC capable of wireless communication. Other devices may communicate via the bus 322. Also, various components (such as the network interface device 330) may communicate with the MCH 308 in some embodiments of the invention. In addition, the processor 302 and the MCH 308 may be combined to form a single chip. Furthermore, the graphics interface 314 may be included within the MCH 308 in other embodiments of the invention.

Furthermore, the computing system 300 may include volatile and/or nonvolatile memory (or storage). For example, nonvolatile memory may include one or more of the following: read-only memory (ROM), programmable ROM (PROM), erasable PROM (EPROM), electrically EPROM (EEPROM), a disk drive (e.g., 328), a floppy disk, a compact disk ROM (CD-ROM), a digital versatile disk (DVD), flash memory, a magnetooptical disk, or other types of nonvolatile machine-readable media that are capable of storing electronic data (e.g., including instructions). In an embodiment, components of the system 300 may be arranged in a point-to-point (PtP) configuration such as discussed with reference to Fig. 4. For example, processors, memory, and/or input/output devices may be interconnected by a number of point-to-point interfaces.

**Fig. 4** illustrates a computing system 400 that is arranged in a point-to-point (PtP) configuration, according to an embodiment of the invention. In particular, Fig. 4 shows a system where processors, memory, and input/output devices are interconnected by a number of point-to-point interfaces. The operations discussed with reference to Figs. 1-3 may be performed by one or more components of the system 400.

As illustrated in Fig. 4, the system 400 may include several processors, of which only two, processors 402 and 404 are shown for clarity. The processors 402 and 404 may each include a local memory controller hub (MCH) 406 and 408 to couple with memories 410 and 412. The memories 410 and/or 412 may store various data such as those discussed with reference to the memory 312 of Fig. 3 (which may store one or more of the items 104-112 of Fig. 1 in case the system 400 is a client and store one or more of the items 132-136 of Fig. 1 in case the system 400 is a cloud resource/server).

The processors 402 and 404 may be any suitable processor such as those discussed with reference to the processors 302 of Fig. 3. The processors 402 and 404 may exchange data via a point-to-point (PtP) interface 414 using PtP interface circuits 416 and 418, respectively. The processors 402 and 404 may each exchange data with a chipset 420 via individual PtP interfaces 422 and 424 using point to point interface circuits 426, 428, 430, and 432. The chipset 420 may also exchange data with a high-performance graphics circuit 434 via a high-performance graphics interface 436, using a PtP interface circuit 437.

At least one embodiment of the invention may be provided by utilizing the processors 402 and 404. For example, the processors 402 and/or 404 may perform one or more of the operations of Figs. 1-3. Other embodiments of the invention, however, may exist in other circuits, logic units, or devices within the system 400 of Fig. 4. Furthermore, other embodiments of the invention may be distributed throughout several circuits, logic units, or devices illustrated in Fig. 4.

The chipset 420 may be coupled to a bus 440 using a PtP interface circuit 441. The bus 440 may have one or more devices coupled to it, such as a bus bridge 442 and I/O devices 443. Via a bus 444, the bus bridge 442 may be coupled to other devices such as a keyboard/mouse 445, the network interface device 430 discussed with reference to Fig. 4 (such as modems, network interface cards (NICs), or the like that may be coupled to the computer network 120), audio I/O device, and/or a data storage device 448. The data storage device 448 may store code 449 that may be executed by the processors 402 and/or 404.

In various embodiments of the invention, the operations discussed herein, e.g., with reference to Figs. 1-4, may be implemented as hardware (e.g., logic circuitry), software (including, for example, micro-code that controls the operations of a processor such as the processors discussed with reference to Figs. 1-4), firmware, or combinations thereof, which may be provided as a computer program product, e.g., including a tangible machine-readable or computer-readable medium having stored thereon instructions (or software procedures) used to program a computer (e.g., a processor or other logic of a computing device) to perform an operation discussed herein. The machine-readable medium may include a storage device such as those discussed herein.

Additionally, such tangible computer-readable media may be downloaded as a computer program product, wherein the program may be transferred from a remote computer (e.g., a server) to a requesting computer (e.g., a client) by way of data signals embodied in tangible propagation medium via a communication link (e.g., a bus, a modem, or a network connection).

Thus, although embodiments of the invention have been described in language specific to structural features and/or methodological acts, it is to be understood that claimed subject matter may not be limited to the specific features or acts described. Rather, the specific features and acts are disclosed as sample forms of implementing the claimed subject matter.

## Claims

1. A method comprising:
offloading one or more computing operations to a virtual device in response to a selection of the virtual device amongst a plurality of devices available to an application,
wherein the selection of the virtual device is based on a comparison of one or more properties of the virtual device and one or more requirements to be determined by the application, and
wherein the one or more properties of the virtual device are to represent available resources of a cloud.

2. The method of claim 1, wherein the plurality of devices are to comprise a processor.

3. The method of claim 2, further comprising the processor is to determine whether to offload the one or more computing operations from the processor to the virtual device.

4. The method of claim 2, further comprising the processor executing the application.

5. The method of claim 1, wherein the offloading is to be performed in accordance with OpenCL (Open Computing Language).

6. The method of claim 1, further comprising generating a device context of the virtual device in response to the selection of the virtual device amongst the plurality of devices.

7. The method of claim 6, further comprising interacting with the virtual device based on the generated device context.

8. The method of claim 1, further comprising receiving one or more properties of the plurality of devices in response to a request by the application.

9. An apparatus comprising:
a memory to store data corresponding to a virtual device, wherein the virtual device is to represent available resources of a cloud; and
a processor to determine whether to offload one or more computing operations from the processor to the virtual device.

10. The apparatus of claim 9, wherein the memory is to store one or more of: an OpenCL client application, an OpenCL API (Application Programming Interface), and an OpenCL driver.

11. The apparatus of claim 10, wherein the OpenCL driver is to comprise the virtual device.

12. The apparatus of claim 9, further comprising one or more links to couple a network service of the virtual device to a network service of an available resource of the cloud.

13. The apparatus of claim 9, wherein the cloud is to be coupled to the processor via a network.

14. The apparatus of claim 9, wherein the processor is to comprise one or more processor cores.

15. The apparatus of claim 9, further comprising a resource broker to determine which one of the available resources at the cloud is to service the offloaded one or more computing operations.
